# EUROPEAN PATENT SPECIFICATION

(11) **EP 2 689 324 B1**
(45) Date of publication and mention of the grant of the patent: **29.08.2018**
(21) Application number: 12761329.7
(22) Date of filing: 22.03.2012
(51) Int. Cl.: G06F 7/04, G06F 21/62, G06F 21/12, H04L 29/06

(54) **STRONG RIGHTS MANAGEMENT FOR COMPUTING APPLICATION FUNCTIONALITY**
STRENGE RECHTEVERWALTUNG FÜR DATENVERARBEITUNGSANWENDUNGSFUNKTIONALITÄTEN
GESTION RIGOUREUSE DE DROITS POUR FONCTIONNALITÉ D'APPLICATION INFORMATIQUE

(30) Priority: 22.03.2011 US 201113069271
(43) Date of publication of application: 29.01.2014
(73) Proprietor: Amazon Technologies, Inc., Reno, NV 89507 (US)
(72) Inventor: BROOKER, Marc J., Seattle Washington 98109-5210 (US); BROWN, David, Seattle Washington 98109-5210 (US); DE KADT, Christopher Richard Jaques, Seattle Washington 98109-5210 (US)
(74) Representative: EIP
(86) International application number: PCT/US2012/030130
(87) International publication number: WO 2012/129409

(56) References cited:
- US-A1- 2007 028 244
- US-A1- 2007 157 287
- US-A1- 2011 022 812
- US-A1- 2011 022 812
- Dirk Kuhlmann ET AL: "An Open Trusted Computing Architecture - Secure Virtual Machines Enabling User-Defined Policy Enforcement An Open Trusted Computing Architecture - Secure Virtual Machines Enabling User-Defined Policy Enforcement", , 28 June 2006 (2006-06-28), XP55165059, Retrieved from the Internet: URL:http://maswi.polito.it/doc/public/rz36 55.pdf [retrieved on 2015-01-27]
- PAPAGIANNI ET AL.: 'Supporting end-to-end resource virtualization for Web 2.0 applications using Service Oriented Architecture' 2008 GLOBECOM WORKSHOPS 30 November 2008, pages 1 - 7, XP031405574 Retrieved from the Internet: <URL:http://eprints.eemcs.utwente.nl/14633/ 01/glow-PID781177.pdf> [retrieved on 2012-06-06]
- 'BLIBLIOGRAPHIC DETAILS OF "SUPPORTING END-TO-END RESOURCE VIRTUALIZATION FOR WEB 2.0 APPLICATIONS USING SERVICE ORIENTED ARCHITECTURE"' NARCIS - NATIONAL ACADEMIC RESEARCH AND COLLABORATIONS INFORMATION SYSTEM, [Online] 06 June 2012, page 1, XP055147832 Retrieved from the Internet: <URL:HTTP://WWW.NARCIS.NL/PUBLICATION/RECOR DID/OAI:DOC.UTWENTE.NL:62620> [retrieved on 2012-06-06]

## Description

### BACKGROUND

From data processing and engineering to education and entertainment, computing devices have found a wide variety of applications in modern homes, schools and workplaces. Many such computing devices include processors capable of executing instructions (e.g., instructions corresponding to elements of a computer programming language), and much of the functionality of a computing device may be controlled by a set of executable instructions and, optionally, a set of configuration data (e.g., by a computer program). Development of a computer program for a particular application and/or set of functionality can require a significant investment of time and resources. For example, years of effort by teams of dozens of people is not uncommon. However, executable instructions and configuration data can have a digital representation (e.g., an application "executable" or "binary") that is easily copied, and illegal and/or uncompensated use of enabled functionality (e.g., application "piracy") is a significant problem.

Several conventional "rights management" schemes (e.g., "copy-protection" schemes) attempt to address such illegal and/or uncompensated use. For example, some conventional rights management schemes involve cryptographic keys that unlock corresponding sets of application functionality. Some conventional rights management schemes involve authentication and/or periodic re-authentication with a remote server (e.g., remote in a communication network). Some conventional rights management schemes involve checking for the local presence of a physical computing device component (e.g., a "dongle"). However, conventional rights management schemes have disadvantages.

For example, the copy enabling the illegal and/or uncompensated use of application functionality may control and/or be installed on computing device hardware to which the user has physical access. Even where portions of executable instructions and/or configuration data begin encrypted and/or locked, such physical access can enable the user to obtain corresponding decrypted and/ or unlocked portions, or otherwise circumvent the need to obtain a legitimate key. Such physical access may also enable the user to emulate, or otherwise circumvent the need for, a remote authentication server and/or a local dongle. Remote access to low-level computing device functionality (e.g., operating system-level functionality) and/or access to low-level functionality of a communication network connected to the computing device (e.g., access to in-transit data packet "sniffing") can similarly enable a user intent on illegal and/or uncompensated use of application functionality.

Dirk Kuhlmann et al: "An Open Trusted Computing Architecture - Secure Virtual Machines Enabling User-Defined Policy Enforcement, 28 June 2006, discloses an open trusted computing architecture with secure virtual machines enabling user defined policy enforcement. The proposed platform has a layered system architecture including a trusted virtualization layer with strong isolation properties among virtual machines and well defined interfaces to the trusted platform module. A lower level part controls the basic access, communication and enforcement and provides an interface to the higher layers. The customer components will be hosted in compartments characterized by hosted services and applications, their configurations and policies. These policies define the protection level for the accessed data, the protection level of applications and services that participate in the processing of data, the information flow between different compartments and the permitted interactions with the virtualization environment.

US 2011/022812 A1 discloses systems and methods for establishing a cloud bridge between virtual storage resources.

It is therefore the object of the present invention to provide an improved computer implemented method for managing rights to computing application functionality using virtual machines, as well as corresponding computerized system.

This object is solved by the subject matter of the independent claims.

Preferred embodiments are defined by the dependent claims.

### BRIEF DESCRIPTION OF THE DRAWINGS

Various embodiments in accordance with the present disclosure will be described with reference to the drawings, in which:
Figure 1 is a schematic diagram illustrating an example environment for implementing aspects in accordance with at least one embodiment;
Figure 2 is a schematic diagram depicting aspects of an example virtual resource provisioning architecture in accordance with at least one embodiment;
Figure 3 is a schematic diagram depicting aspects of an example virtual resource provider in accordance with at least one embodiment;
Figure 4 is a schematic diagram depicting aspects of an example control plane in accordance with at least one embodiment;
Figure 5 is a flowchart depicting example steps for making an application appliance available at a virtual resource provider in accordance with at least one embodiment; and
Figure 6 is a flowchart depicting example steps for accessing application appliance functionality in accordance with at least one embodiment; and
Figure 7 is a flowchart depicting example steps for dynamic feature activation in accordance with at least one embodiment; and
Figure 8 is a flowchart depicting example steps for workflow management in accordance with at least one embodiment.

Same numbers are used throughout the disclosure and figures to reference like components and features, but such repetition of number is for purposes of simplicity of explanation and understanding, and should not be viewed as a limitation on the various embodiments.

### DETAILED DESCRIPTION

In the following description, various embodiments will be described. For purposes of explanation, specific configurations and details are set forth in order to provide a thorough understanding of the embodiments. However, it will also be apparent to one skilled in the art that the embodiments may be practiced without the specific details. Furthermore, well-known features may be omitted or simplified in order not to obscure the embodiment being described.

In at least one embodiment, illegal, unauthorized, uncompensated and/or under-compensated utilization of computing application functionality may be mitigated at least in part by controlling access to executable instructions that implement the computing application functionality. The executable instructions may be executed by a set of one or more virtual computing machines ("virtual machines") provisioned by a multi-tenant virtual resource provider. The virtual resource provider may provision the virtual machines and other virtual resources with a managed set of implementation resources such as physical servers, physical network switches and physical network paths. The provisioning, including allocation and ongoing reallocation of the implementation resources, may be managed by a control plane of the virtual resource provider. The control plane may perform a number of control functions for the virtual resource provider including management and enforcement of virtual resource access policies.

For example, the virtual resource provider may provision the set of virtual machines and a set of communication connections enabling communication with the set of virtual machines. The set of virtual resource access policies enforced by the control plane of the virtual resource provider may include one or more policies collectively specifying that the provisioned set of virtual machines executing the executable instructions that implement the computing application functionality are to be accessed with the provisioned set of communication connections (the "allowed" set of communication connections), and no others. Where a communication protocol allows specification of a communication port or a sub-address or the like, such policies may specify the allowed communication connections to a finest level of granularity. The set of virtual resource access policies may further include one or more policies collectively specifying that the computing application functionality is to be accessed in accordance with a license or agreement between a third party provider or vendor of the computing application functionality and a user of the computing application functionality.

In at least one embodiment, the allowed set of communication connections corresponds to communication connections between virtual machines provisioned by the virtual resource provider. For example, the allowed set of communication connections may be between the provisioned set of virtual machines executing the executable instructions that implement the computing application functionality (the "application appliance") and one or more virtual machines provisioned by the virtual resource provider at which a user account and work environment is maintained by an operating system (one or more "user VMs"). In at least one embodiment, the allowed set of communication connections may include communication connections between the application appliance and one or more virtual machines and/or computing devices not provisioned by the virtual resource provider, and participating in a virtual private computing cloud (VPC) maintained by the virtual resource provider such that the control plane may enforce access policies with respect to the application appliance and/or the allowed set of communication connections.

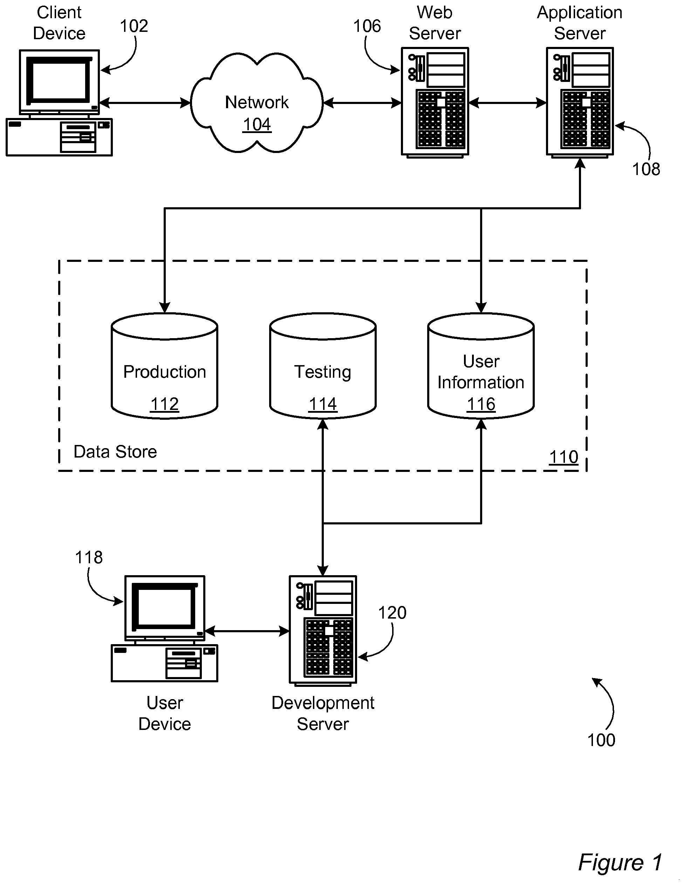

Various approaches may be implemented in various environments for various applications. For example, Figure 1 illustrates aspects of an example environment 100 for implementing aspects in accordance with various embodiments. As will be appreciated, although a Web-based environment may be utilized for purposes of explanation, different environments may be utilized, as appropriate, to implement various embodiments. The environment 100 shown includes both a testing or a development portion (or side) and a production portion. The production portion includes an electronic client device 102, which may include any appropriate device operable to send and receive requests, messages, or information over an appropriate network 104 and convey information back to a user of the device 102. Examples of such client devices include personal computers, cell phones, handheld messaging devices, laptop computers, tablet computers, set-top boxes, personal data assistants, electronic book readers, and the like.

The network 104 may include any appropriate network, including an intranet, the Internet, a cellular network, a local area network, a wide area network, a wireless data network, or any other such network or combination thereof. Components utilized for such a system may depend at least in part upon the type of network and/or environment selected. Protocols and components for communicating via such a network are well known and will not be discussed herein in detail. Communication over the network may be enabled by wired or wireless connections, and combinations thereof. In this example, the network 104 includes the Internet, as the environment includes a Web server 106 for receiving requests and serving content in response thereto, although for other networks an alternative device serving a similar purpose could be utilized as would be apparent to one of ordinary skill in the art.

The illustrative environment 100 includes at least one application server 108 and a data store 110. It should be understood that there may be several application servers, layers, or other elements, processes, or components, which may be chained or otherwise configured, which may interact to perform tasks such as obtaining data from an appropriate data store. As used herein the term "data store" refers to any device or combination of devices capable of storing, accessing, and/or retrieving data, which may include any combination and number of data servers, databases, data storage devices, and data storage media, in any standard, distributed, or clustered environment.

The application server 108 may include any appropriate hardware and software for integrating with the data store as needed to execute aspects of one or more applications for the client device 102, and may even handle a majority of the data access and business logic for an application. The application server 108 provides access control services in cooperation with the data store 110, and is able to generate content such as text, graphics, audio, and/or video to be transferred to the user, which may be served to the user by the Web server 106 in the form of HTML, XML, or another appropriate structured language in this example.

The handling of all requests and responses, as well as the delivery of content between the client device 102 and the application server 108, may be handled by the Web server 106. It should be understood that the Web and application servers 106, 108 are not required and are merely example components, as structured code discussed herein may be executed on any appropriate device or host machine as discussed elsewhere herein. Further, the environment 100 may be architected in such a way that a test automation framework may be provided as a service to which a user or application may subscribe. A test automation framework may be provided as an implementation of any of the various testing patterns discussed herein, although various other implementations may be utilized as well, as discussed or suggested herein.

The environment 100 may also include a development and/or testing side, which includes a user device 118 allowing a user such as a developer, data administrator, or tester to access the system. The user device 118 may be any appropriate device or machine, such as is described above with respect to the client device 102. The environment 100 may also include a development server 120, which functions similar to the application server 108 but typically runs code during development and testing before the code is deployed and executed on the production side and becomes accessible to outside users, for example. In some embodiments, an application server may function as a development server, and separate production and testing storage may not be utilized.

The data store 110 may include several separate data tables, databases, or other data storage mechanisms and media for storing data relating to a particular aspect. For example, the data store 110 illustrated includes mechanisms for storing production data 112 and user information 116, which may be utilized to serve content for the production side. The data store 110 also is shown to include a mechanism for storing testing data 114, which may be utilized with the user information for the testing side. It should be understood that there may be many other aspects that are stored in the data store 110, such as for page image information and access right information, which may be stored in any of the above listed mechanisms as appropriate or in additional mechanisms in the data store 110.

The data store 110 is operable, through logic associated therewith, to receive instructions from the application server 108 or development server 120, and obtain, update, or otherwise process data in response thereto. In one example, a user might submit a search request for a certain type of item. In this case, the data store 110 might access the user information 116 to verify the identity of the user, and may access the catalog detail information to obtain information about items of that type. The information then may be returned to the user, such as in a results listing on a Web page that the user is able to view via a browser on the user device 102. Information for a particular item of interest may be viewed in a dedicated page or window of the browser.

Each server typically will include an operating system that provides executable program instructions for the general administration and operation of that server, and typically will include a computer-readable medium storing instructions that, when executed by a processor of the server, allow the server to perform its intended functions. Suitable implementations for the operating system and general functionality of the servers are known or commercially available, and are readily implemented by persons having ordinary skill in the art, particularly in light of the disclosure herein.

The environment 100 in one embodiment is a distributed computing environment utilizing several computer systems and components that are interconnected via communication links, using one or more computer networks or direct connections. However, it will be appreciated by those of ordinary skill in the art that such a system could operate equally well in a system having fewer or a greater number of components than are illustrated in Figure 1. Thus, the depiction of the system 100 in Figure 1 should be taken as being illustrative in nature, and not limiting to the scope of the disclosure.

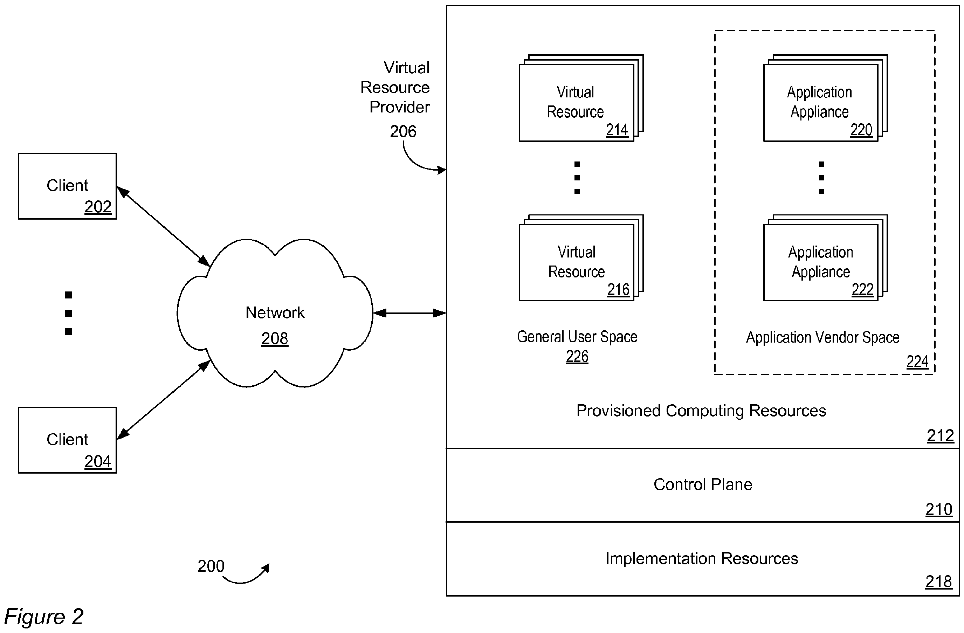

In at least one embodiment, one or more aspects of the environment 100 may incorporate and/or be incorporated into a virtual resource provisioning architecture. Figure 2 depicts aspects of an example virtual resource provisioning architecture 200 in accordance with at least one embodiment. The example virtual resource provisioning architecture 200 includes multiple clients 202-204 communicatively connected to a virtual resource provider 206 over a network 208. For example, the clients 202-204 may correspond to computing devices such as the computing device 102 of Figure 1 and/or client programs incorporated into such computing devices. The ellipsis between the client 202 and the client 204 indicates that the virtual resource provisioning architecture 200 may include any suitable number of clients although, for clarity, only two are shown in Figure 2. Ellipses are used similarly throughout the drawings.

One or more of the clients 202-204 may be utilized by one or more authorized users associated with a tenant of the virtual resource provider 206 to interact with a control plane 210 of the virtual resource provider 206, and thereby provision one or more virtual computing resources 212. Alternatively, or in addition, one or more of the clients 202-204 may be utilized to interact with provisioned virtual computing resources 212. The provisioned virtual computing resources 212 may include any suitable type and/or number of virtual resources 214-216. Examples of suitable virtual resources 214-216 include virtual machines such as virtual computer systems (VCSs), virtual networks, virtual private networks (VPNs), virtual network connections, virtual data stores, virtual file system volumes, specialized data processing agents, media streaming agents including audio and video streaming agents, message queues, publish-subscribe topics configured to notify subscribers having subscriptions that match events published to the publish-subscribe topics, monitoring agents, load balancing agents, and suitable combinations thereof.

The virtual resource provider 206 may further include any suitable type and/or number of implementation resources 218. Each of the provisioned computing resources 212 may be implemented by a set of the implementation resources 218. In at least one embodiment, various implementation resources of the implementation resources 218 may be configured to participate in implementing, at least in part, multiple of the provisioned computing resources 212. Examples of suitable implementation resources 218 include VCS servers, data store servers, computers, server racks, networking hardware including switches, routers, gateways, bridges, hubs, repeaters, firewalls and wireless transceivers, power supplies, generators, data centers, rooms in data centers, mobile data centers, as well as non-volatile storage devices including hard drives, processing units such as central processing units (CPUs), caches in processing units, processing cores in multi-core processing units, volatile storage devices such as memory modules including random access memory (RAM) modules, and RAM chips of multi-chip memory modules, network interface hardware and suitable combinations thereof.

In at least one embodiment, one or more types of provisioned computing resource 212, such as virtual computer systems, are implemented by default with a set of implementation resources having a standardized set of implementation resource capacities (e.g., a standardized amount of volatile and/or non-volatile storage). Different implementation resource capacities may be provisioned for such computing resources 212. For example, such computing resources 212 may be provisioned with implementation resources collectively having a set of implementation resource capacities one or more of which is a multiple of a corresponding implementation resource capacity in the standardized set. Suppose a virtual computer system with 1 gigabyte of available RAM corresponds to a "small" size. Virtual computer systems with "medium" and "large" sizes, corresponding to 2 gigabytes and 4 gigabytes of RAM, respectively, may be requested, for example. Provisioned computing resources 212 with larger "sizes" may have commensurately higher associated costs.

The provisioned virtual computing resources 212 may further include any suitable type and/or number of application appliances 220-222. In at least one embodiment, an application appliance may configure a set of one or more virtual resources (e.g., corresponding to the virtual resources 214-216) and/or the implementation resources 218 to provide a set of computing application functionality. Application appliances 220-222 may be provisioned in a manner corresponding to that of provisioning the virtual resources 214-216. In the example virtual resource provider 206, application appliances 220-222 are located in an application vendor space 224 distinct from a general user space 226 of the provisioned computing resources 212. Location in different provisioned computing resource spaces 224-226 may correspond to different access policy and/or cost accounting treatments reflecting different roles with respect to the virtual resource provider 206.

For example, virtual resources 214-216 provisioned in the general user space 226 may facilitate a business end-use of a tenant. In contrast, application appliances 220-222 may be offered by third party vendors to provide a set of computing application functionality. Access policies associated with virtual resources 214-216 in the general user space 226 may allow access from public networks. In contrast, access policies associated with application appliances 220-222 may restrict access to other provisioned computing resources 212 or to a particular subset of the virtual resources 214-216 such as a particular set of user VMs and/or communication connections. Costs associated with virtual resources 214-216 in the general user space 226 may be determined based at least in part on allocated implementation resources 218. In contrast, costs associated with application appliances 220-222 may be determined based at least in part on a flat fee, a fee per suitable unit of time, associated implementation resource 218 costs plus a surcharge, feature usage, and/or any suitable cost accounting method.

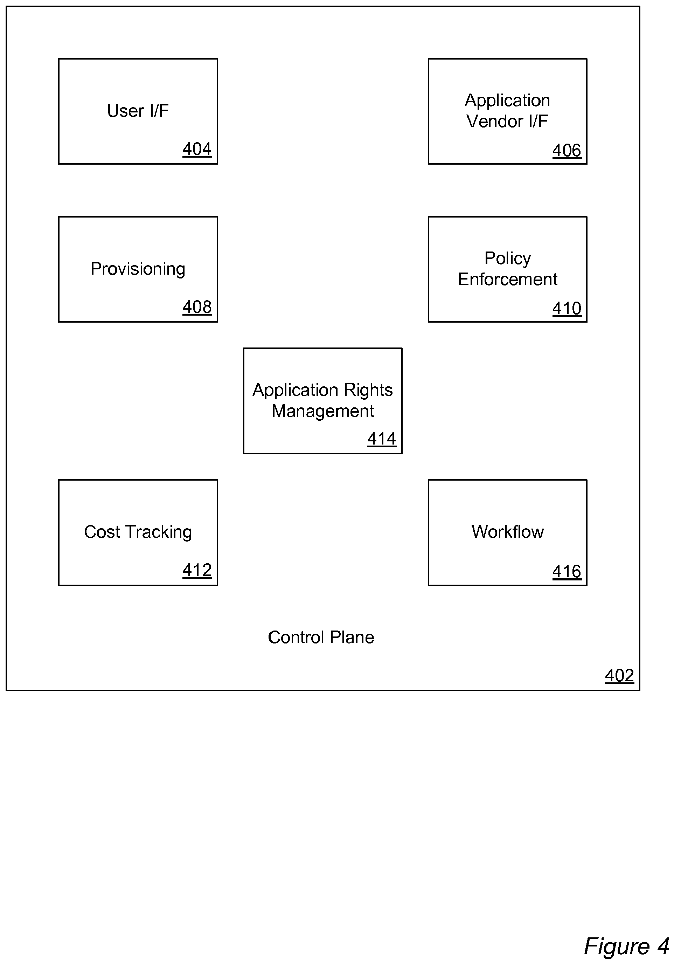

The control plane 210 may provision computing resources 212 with implementation resources 218 responsive to provisioning requests. The control plane 210 may further manage and enforce policies that control access to the provisioned computing resources, including one or more policies that define and/or maintain the application vendor space 224 distinct from the general user space 226. The control plane 210 may further track costs associated with maintaining the provisioned computing resources 212 and allocate the costs as appropriate to tenant accounts. An example control plane in accordance with at least one embodiment is described below in more detail with reference to Figure 4.

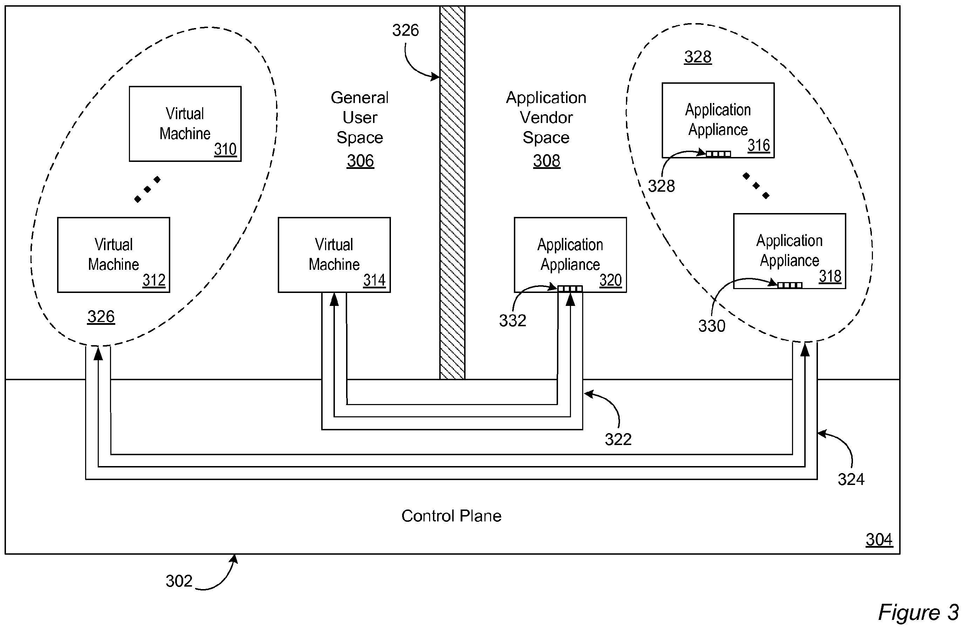

In at least one embodiment, access to executable instructions that implement the computing application functionality of an application appliance 220-222 is controlled at least in part by enforcing at least one policy specifying that particular application appliances 220-222 be accessed through a particular set of communication connections, and no other. Figure 3 depicts an example virtual resource provider 302 in accordance with at least one embodiment. The example virtual resource provider 302 of Figure 3 includes a control plane 304, a general user space 306 and an application vendor space 308 corresponding to the control plane 210, the general user space 226 and the application vendor space 224 of Figure 2. The general user space 306 of Figure 3 contains multiple virtual machines 310-314 communicatively connected to multiple application appliances 316-320 with multiple provisioned communication connections 322-324. For example, the virtual machines 310-314 may be user VMs, and the application appliances 316-320 may correspond to the application appliances 220-222 of Figure 2. In at least one embodiment, user control over application appliances 316-320 is at a reduced level relative to the virtual machines 310-314. For example, user control over the application appliances 316-320 may be limited to starting, suspending and terminating the application appliances 316-320. In contrast, authorized users may be able to comprehensively configure and login to the virtual machines 310-314.

In the example virtual resource provider 302, the general user space 306 and the application vendor space 308 are separated by a communicative barrier 326 to indicate that ad hoc and/or noncompliant communication connections between the virtual machines 310-314 and the application appliances 316-320 are prevented by one or more policies enforced by the control plane 304. One or more of the virtual machines 310-314 may be connected to one or more of the application appliances 316-320 with policy-complaint communication connections 322-324. In the example virtual resource provider 302, the virtual machine 314 is connected to the application appliance 320 with policy-compliant communication connection 322. The set 326 of virtual machines 310-312 are connected to the set of application appliances 316-318 with policy-compliant communication connection 324. The policy-compliant communication connections 322-324 are depicted as passing through the control plane 304 to indicate the ability of the control plane 304 to enforce associated access policies.

The policy-compliant communication connections 322-324 may be maintained with any suitable communication media and/or communication protocol. For example, the policy-compliant communication connections 322-324 may be maintained with a communication protocol in accordance with a transmission control protocol and/or an internet protocol (e.g., TCP/IP). Each virtual machine 310-314 and/or application appliance 316-320 may be associated with a communication protocol address and/or communication port and, for example, the access policy set associated with the communication connection 322 may specify that a destination of protocol messages conveyed through the communication connection 322 correspond to a particular communication protocol address and a particular communication port. Alternatively, or in addition, the application appliances 316-320 may incorporate and/or provide one or more interfaces 328-332 to the computing application functionality, and, for example, the access policy set may specify that protocol messages conveyed through the communication connection 322 be in accordance with and/or directed to one or more elements of the interface 332 (e.g., a selected subset of such interface elements).

The interfaces 328-332 may include any suitable interface elements such as interface elements corresponding to functionality, or sets of functionality, of the computing application. The interfaces 328-332 may incorporate and/or be incorporated in a user interface (UI) such as a graphical user interface (GUI), a Web-based interface, a programmatic interface such as an application programming interface (API) and/or a set of remote procedure calls (RPCs) corresponding to provisioning interface elements, a messaging interface such as a messaging interface in which the interface elements of the interfaces 328-332 correspond to messages of a communication protocol, a remote desktop protocol such as a remote framebuffer protocol (e.g., RFB) or an "X WINDOW SYSTEM" protocol as described in Scheifler et al., "The X Window System," ACM Transactions on Graphics, April 1986, pages 79-109, and/or any suitable combination thereof. Web-based interfaces may include Web services interfaces such as Representational State Transfer (REST) compliant ("RESTful") Web services interfaces or Simple Object Access Protocol (SOAP) compliant Web services interfaces or other "non-RESTful" Web services interfaces.

Figure 4 depicts aspects of an example control plane 402 in accordance with at least one embodiment. The control plane 402 may include a user interface (I/F) 404 enabling authorized users to access control plane 402 functionality, and an application vendor interface (I/F) 406 enabling an application vendor to manage a set of application appliances (e.g., application appliances 316-320 of Figure 3) offered by the application vendor. The user interface 404 and the application vendor interface 406 may incorporate and/or be incorporated in any suitable type of functionality interface (e.g., as described for interfaces 328-332 of Figure 3).

The virtual resource provider 302 (Figure 3) incorporating the control plane 402 may have multiple tenants responsible for costs associated with computing resources 212 (Figure 2) provisioned by tenant-authorized users. An administrative user designated by a tenant may interact with the user interface 404 to manage different types of users associated with the tenant, including users authorized to incur costs, for example, by provisioning computing resources 212. Authorized users may interact with the user interface 404 to provision computing resources 212, and manage (e.g., view, label, allocate, route and discharge) associated costs.

An application vendor may also be a tenant of the virtual resource provider 302 (Figure 3), although this is not necessary in each embodiment. The application vendor may interact with the application vendor interface 406 to configure and/or register application appliances (such as the application appliances 316-320 of Figure 3) as available for provisioning, as well as specify license conditions, configure associated cost plans and manage associated costs. The license conditions may include any suitable conditions with respect to access of the computing application functionality such as that a valid and unexpired license exist, that no more than a maximum number of users has accessed the computing application functionality or some specified portion thereof, that no more than a maximum number of concurrent users is accessing the computing application functionality or some specified portion thereof, that the computing application functionality or some specified portion thereof has been accessed no more than a threshold number of times, and the like. Depending on the associated cost plan, the application vendor may be responsible to the virtual resource provider 302 for costs incurred by provisioned instances of application appliances offered by the application vendor. Alternatively, or in addition, the associated cost plan may specify that the provisioning tenant is responsible for associated costs, and fees paid by the provisioning tenant may be allocated between the application vendor and the virtual resource provider in accordance with an agreement between them.

A provisioning component 408 of the control plane 402 may provision computing resources 212 (Figure 2) responsive to provisioning requests, for example, received from the user interface 404. The provisioning component 408 may determine types and capacities of implementation resources 218 required to implement particular provisioned computing resources 212 and allocate available such implementation resources to the task of implementing virtual resources 214-216 and/or application appliances 220-222, as well as ongoing re-allocation of implementation resources 212, for example, to increase utilization efficiency and/or to lower a chance of provisioned resource failure due to implementation resource failure.

A policy enforcement component 410 of the control plane 402 may manage and enforce virtual resource provider 206 (Figure 2) policies. For example, the policy enforcement component 410 may receive policies to be enforced from an authorized user through the user interface 404, policies with respect to a particular provisioned resource may be established at the policy enforcement component 410 during provisioning, policies may be established at the policy enforcement component 410 by an administrator of the virtual resource provider 206, and/or policies (e.g., cryptographically signed policies) may be received along with provisioned resource 212 access and/or interaction requests from clients 202-204. Virtual resource provider 206 policies may govern any suitable aspect of virtual resource provider 206 functionality including functionality provided by provisioned resources 212. Particular sets and/or subsets of functionality provided by provisioned resources 212 may be named, labeled and/or addressable. Each such set and/or subset may be individually governed with virtual resource provider 206 policies. Such governance may include constraint with respect to implementation resource allocation and utilization, as well as access by users and transfer of data to and from particular provisioned resources 212. Users of provisioned resources 212 may include client 202-204 users including anonymous users, virtual resource provider 206 users including administrative users, and virtual resource provider 206 components including implementation resources 218, provisioned resources 212, and control plane 402 components 404-416.

A virtual resource provider 206 (Figure 2) policy may specify any suitable set of conditions to be satisfied. For example, the policy may specify conditions under which access to a particular application appliance is permitted. Such conditions may be specified with any suitable condition specification language including suitable programming languages, and may include compound conditions, for example, specified with Boolean operators. Condition parameters may include any suitable data available to the virtual resource provider 206. Condition parameter examples include environmental data such as calendar date and time of day, and request-associated data such as originating network address, originating geographical location, originating political and/or administrative division and communication protocol employed.

A cost-tracking component 412 of the control plane 402 may track costs (e.g., computation and/or financial costs) associated with provisioning and/or maintaining the computing resources 212 (Figure 2). Costs may be allocated to accounts including tenant accounts. For example, costs associated with computing resources 212 provisioned by one or more users associated with a particular tenant may be allocated to the tenant's account. A tenant account and/or one or more of the provisioned resources 212 may be associated with one or more cost plans, and the costs allocated to the tenant account may be determined in accordance with the cost plan(s). A cost plan may specify costs as flat fees and/or based on any suitable metric. For example, the cost plan may specify costs based on a number of units of time that a particular provisioned resource 212 is available to at least one user associated with the tenant, a number of units of time that a particular implementation resource 218 is allocated to maintaining provisioned resources 212 associated with the tenant, a number of uses of a particular set of features of a particular provisioned resource 212, and/or suitable combinations thereof. With respect to application appliances 220-222, the cost plan may specify a cost accounting relationship with the tenant including cost pass-through, cost plus a surcharge, flat fee, periodic access fee, feature access fee, activation and deactivation fees, independent billing, and suitable combinations thereof.

An application rights management (ARM) component 414 of the control plane 402 may act to establish and maintain user and vendor rights with respect to provisioned application appliances 220-222 (Figure 2). For example, the application rights management component 414 may provide and/or establish virtual resource provider 206 policies that control access to executable instructions that implement functionality of the provisioned application appliances 220-222. The application rights management component 414 may further facilitate activation and/or deactivation of sets of application functionality and/or application features. For example, the application rights management component 414 may notify application appliances 220-222 of user requests to activate and/or deactivate application features, and modify virtual resource provider 206 policies and/or cost plans responsive to activation status updates received from application appliances 220-222.

The control plane 402 may further include a workflow component 416 configured at least to establish and maintain workflows such as provisioned resource workflows, provisioning workflows and/or policy enforcement workflows established by provisioned resources 212 (Figure 2), the provisioning component 408 and the policy enforcement component 410, respectively. Workflows may include one or more sequences of tasks to be executed to perform a job, such as virtual resource configuration, provisioning or policy management. A workflow, as the term is used herein, is not the tasks themselves, but a task control structure that may control flow of information to and from tasks, as well as the order of execution of the tasks it controls. For example, a workflow may be considered a state machine that can manage and return the state of a process at any time during execution. Workflows may be created from workflow templates. For example, a policy enforcement workflow may be created from a policy enforcement workflow template configured with parameters by the policy enforcement component 410.

The workflow component 416 may modify, further specify and/or further configure established workflows. For example, the workflow component 416 may select particular implementation resources of the virtual resource provider 206 (Figure 2) to execute and/or be assigned to particular tasks. Such selection may be based at least in part on the computing resource needs of the particular task as assessed by the workflow component 416. As another example, the workflow component 416 may add additional and/or duplicate tasks to an established workflow and/or reconfigure information flow between tasks in the established workflow. Such modification of established workflows may be based at least in part on an execution efficiency analysis by the workflow component 416. For example, some tasks may be efficiently performed in parallel, while other tasks depend on the successful completion of previous tasks.

The control plane 402 may be implemented with a set of provisioned resources 212 (Figure 2), a set of implementation resources 218 and/or corresponding computing resources. Each of the implementation resources 218 may be controlled by the control plane 210. For example, each implementation resource may participate in and/or incorporate a portion, agent and/or component of the control plane 210. Each of the provisioned resources 212 may be controlled by the control plane 210. For example, each provisioned resource may participate in and/or incorporate a portion, agent and/or component of the control plane 210. The control plane 210 may be distributed throughout the implementation resources 218 and/or the provisioned resources 212. For example, the control plane 210 may be implemented with distributed computing techniques well known to those of skill in the art.

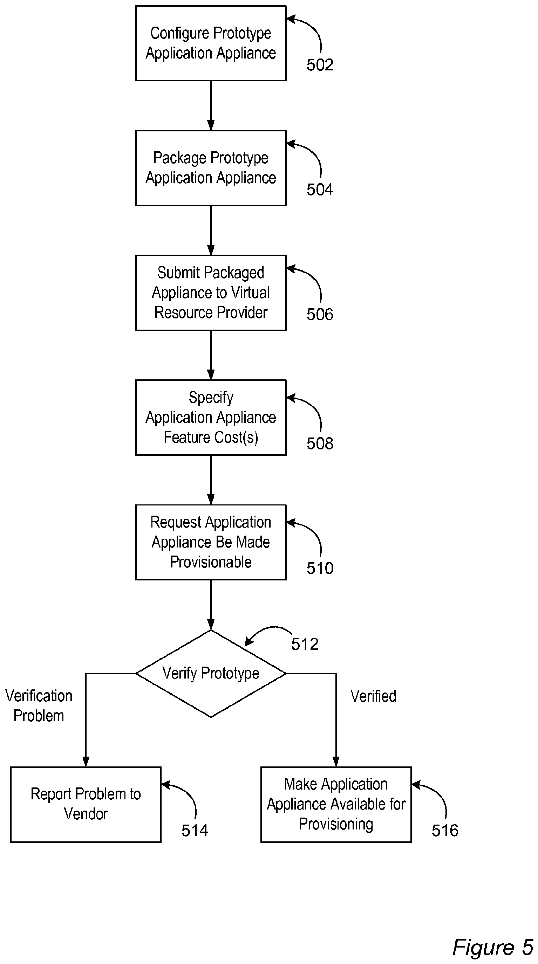

The description now turns to example steps that may be performed in accordance with at least one embodiment. Figure 5 depicts example steps for making an application appliance available at a virtual resource provider in accordance with at least one embodiment. At step 502, a prototype application appliance may be configured. An authorized user of a third party application vendor may provision a virtual machine at the virtual resource provider 206 (Figure 2) and configure the virtual machine to execute instructions that implement a desired set of computing application functionality. For example, the virtual machine may be a virtual computer system incorporating a computer operating system, and the authorized user may install and configure one or more application modules into the virtual computer system and/or the computer operating system. Alternatively, the virtual machine may incorporate the desired set of computing application functionality independent of a computer operating system.

At step 504, the prototype application appliance may be packaged into a form suitable for provisioning. For example, the authorized user may request that the virtual resource provider 206 (Figure 2) create the provisionable package from the prototype configured at step 502. The user interface 404 and/or the application vendor interface 406 (Figure 4) may include one or more interface elements enabling the authorized user to make such requests. At step 506, the packaged prototype may be submitted to and/or registered with the virtual resource provider 206. For example, the application vendor interface 406 make include one or more interface elements enabling such submissions and/or registrations. Step 506 may be incorporated into step 504.

At step 508, one or more application appliance feature costs may be specified. For example, the authorized user may interact with one or more interface elements of the application vendor interface 406 (Figure 4) to specify a cost plan for users of the application appliance. Costs associated with access to basic features may be specified, as well as costs associated with each of a set of non-basic and/or premium features. Application-specific feature codes may be associated with human-readable names, short descriptions and/or long descriptions. At step 510, a request may be made to make the application appliance available for provisioning. For example, the authorized user may submit the request with one or more interface elements of the application vendor interface 406.

At step 512, the submitted and/or registered application appliance prototype may be verified. For example, the application rights management component 414 (Figure 4) may verify a static and/or dynamic integrity of the application appliance prototype including with respect to security. If the application appliance is verified, then at step 516 it may be made available for provisioning by authorized users of tenants of the virtual resource provider 206 (Figure 2). Otherwise, one or more problems that occurred during verification may be reported to the vendor at step 514.

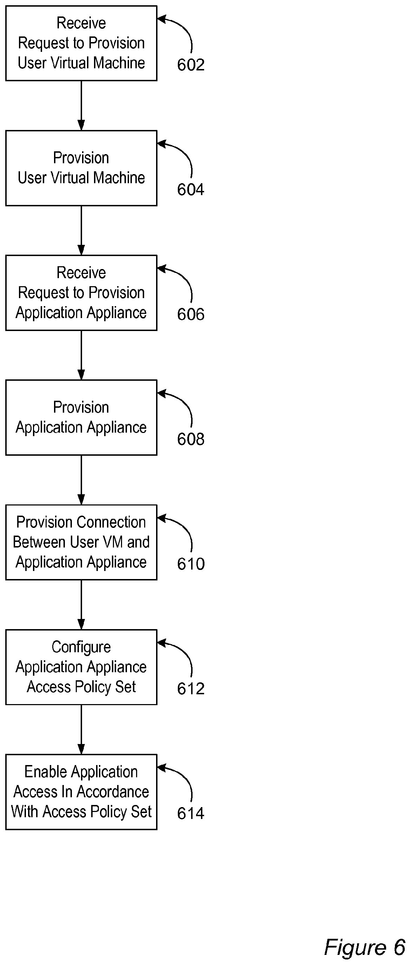

Figure 6 depicts example steps for accessing application appliance functionality in accordance with at least one embodiment. At step 602, a request to provision a user VM may be received. For example, an authorized user associated with a tenant of the virtual resource provider 206 (Figure 2) may submit a provisioning request with the user interface component 404 (Figure 4) of the control plane 402. At step 604, the requested user VM may be provisioned. For example, the provisioning component 408 may provision the requested virtual machine 314 in the general user space 306 (Figure 3). The requested virtual machine 314 may be a virtual computer system incorporating a computer operating system.

At step 606, a request to provision an application appliance may be received. For example, the authorized user may submit another provisioning request with the user interface component 404 (Figure 4). In at least one embodiment, the authorized user need not be aware of how the computing application functionality associated with the application appliance is implemented. For example, the authorized user need not be aware that an application appliance instance is provisioned to implement the computing application functionality. The authorized user may request that the computing application functionality be made available to the user VM provisioned at step 602, and the provisioning request of step 606 may be generated in response, for example, as part of an application appliance provisioning workflow. When the application appliance offers one or more optional features, the provisioning request may further specify a set of optional features to activate during provisioning. In at least one embodiment, the provisioning request may further specify a set of optional implementation resources 218 (Figure 2) and/or resource capacities to be made available to the provisioned application appliance. At step 608, the application appliance may be provisioned. For example, the provisioning component 408 may provision the requested application appliance 320 (Figure 3) in the application vendor space 308 in accordance with the provisioning request of step 606.

At step 610, a communication connection between the user VM and the application appliance may be provisioned. For example, the provisioning component 408 (Figure 4) may provision the communication connection 322 (Figure 3) with suitable implementation resources 218 (Figure 2). At step 612, an application appliance access policy set may be configured. For example, the application rights management component 414 may configure the policy enforcement component 410 with one or more policies governing the provisioned application appliance 320, the provisioned user VM 314 and/or the communication connection 322 between them. Alternatively, the application rights management component 414 may provide one or more templates for such policies that are configured by the application appliance provisioning workflow.

At step 614, access to the provisioned application appliance in accordance with the access policy set configured at step 612 may be enabled. For example, the policy enforcement component 410 (Figure 4) may begin enforcing the access policy set of step 612, the communication connection 322 (Figure 3) may be activated and/or a local interface corresponding to the interface 332 of the application appliance 320 may be made available to processes maintained by the virtual machine 314.

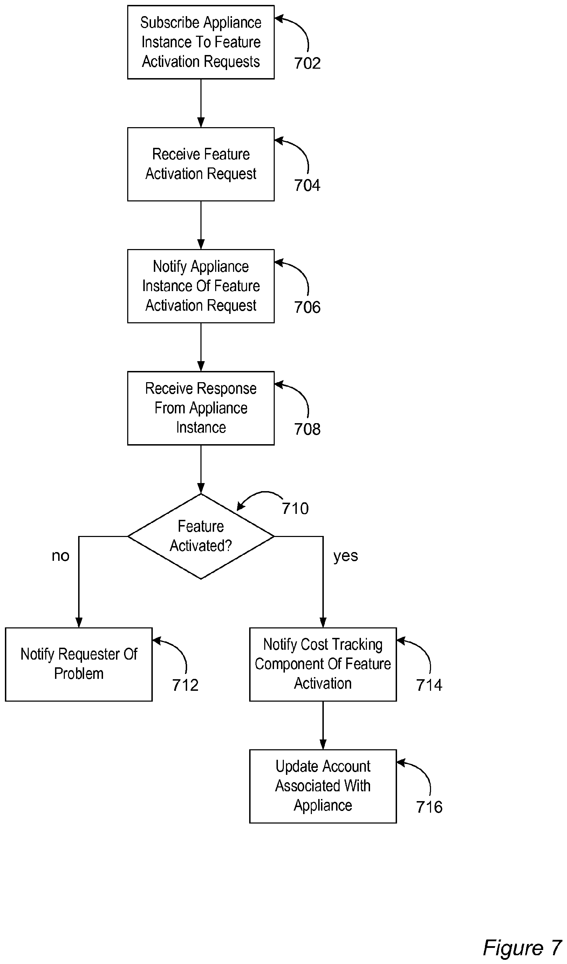

Figure 7 depicts example steps for dynamic feature activation in accordance with at least one embodiment. At step 702, a provisioned application appliance instance may subscribe to feature activation requests. For example, the application rights management component 414 may subscribe the application appliance 320 (Figure 3) to such requests. At step 704, a feature activation request may be received. For example, an authorized user associated with a tenant of the virtual resource provider 206 (Figure 2) may request that an optional set of computing application functionality implemented by the application appliance 320 be made available to the user VM 314. The feature activation request may be made through the user interface 404 (Figure 4) and received and processed by the application rights management component 414 and/or the workflow component 416.

At step 706, the application appliance instance may be notified of the feature activation request received at step 704. For example, the application rights management component 414 (Figure 4) may notify the application appliance 320 (Figure 3) of the feature activation request through a suitable interface element of the application appliance 320. At step 708, a response to the notification of step 706 may be received. For example, the application instance 320 may respond that the requested feature has been activated and/or is available, or else that there was a problem processing the feature activation request.

At step 710, it may be determined whether the requested feature was activated, for example, in accordance with the response received at step 708. If the requested feature was activated, a process incorporating step 710 may progress to step 714. Otherwise, the process may progress to step 712. At step 712, the sender of the request received at step 704 may be notified of the problem that occurred during processing of the feature activation request. At step 714, the cost tracking component 412 (Figure 4) may be notified of the successful activation of the requested feature, for example, by the application rights management component 414. At step 716, an account associated with the application appliance instance may be updated. For example, the cost tracking component 412 may update a tenant account associated with the user VM 314 to begin accounting for the activated feature in accordance with a corresponding cost plan.

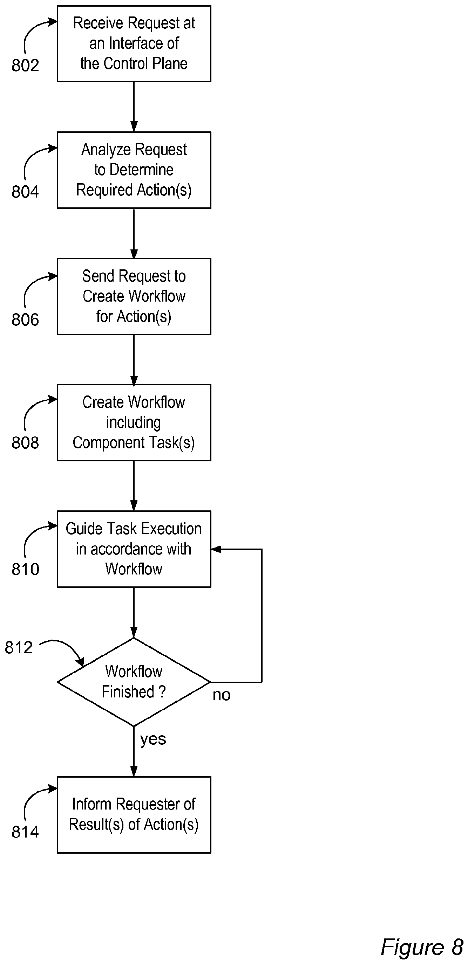

As described above with reference to Figure 4, the control plane 402 may be facilitated by one or more workflows maintained by the workflow component 416. Figure 8 depicts example steps for workflow management in accordance with at least one embodiment. At step 802, a request may be received by an interface of the control plane 402 (Figure 4). For example, the user interface 404 or the application vendor interface 406 of the control plane 402 may receive the request from a user and/or administrator of the virtual resource provider 202. At step 804, the request may be analyzed to determine one or more actions required to successfully process the request. For example, the provisioning component 408 may analyze the request, and determine a set of actions required to provision a set of computing resources 212 (Figure 2). When an interface element receiving the request corresponds to a specific action to be performed, the interface may extract information from the request to be utilized in determining aspects and/or parameters of the action to be performed.

At step 806, a request may be sent to create a workflow based at least in part on the one or more actions determined at step 804. For example, provisioning component 408 (Figure 4) may send the request to the workflow component 416. The request to create the workflow may include the action(s), action metadata such as type of action, and/or action parameters. In at least one embodiment, the control plane 402 and/or the workflow component 416 maintains a job queue for such requests, and workflows are created responsive to new additions to the job queue. At step 808, a workflow and one or more component tasks may be created. For example, the workflow component 416 may analyze the request of step 806 to determine the appropriate workflow and component tasks to create.

At step 810, execution of the component task(s) may be guided in accordance with the workflow. For example, the workflow component 416 (Figure 4) may activate elements of interfaces of various implementation resources to provision the set of virtual resources. Alternatively, or in addition, the workflow component 416 may manage bids for execution of the component task(s) by components of the virtual resource provider 206 (Figure 2). At step 812, it may be determined whether the workflow has finished. For example, the workflow component 416 may determine whether a final task in a sequence of tasks managed by the workflow has completed. If so, a procedure incorporating step 812 may progress to step 814. Otherwise the procedure may return to step 810 for a next task and/or task sequence. Workflows may guide multiple task sequences executing in parallel. In this case, it may be that the workflow is not finished until each of the multiple task sequences completes and/or an explicit workflow finished flag is set by one of the component tasks. At step 814, the sender of the request of step 802 may be informed of result(s) of the action(s).

The various embodiments described herein may be implemented in a wide variety of operating environments, which in some cases may include one or more user computers, computing devices, or processing devices which may be utilized to operate any of a number of applications. User or client devices may include any of a number of general purpose personal computers, such as desktop or laptop computers running a standard operating system, as well as cellular, wireless, and handheld devices running mobile software and capable of supporting a number of networking and messaging protocols. Such a system also may include a number of workstations running any of a variety of commercially-available operating systems and other known applications for purposes such as development and database management. These devices also may include other electronic devices, such as dummy terminals, thin-clients, gaming systems, and other devices capable of communicating via a network.

Most embodiments utilize at least one network that would be familiar to those skilled in the art for supporting communications using any of a variety of commercially-available protocols, such as TCP/IP, OSI, FTP, UPnP, NFS, CIFS, and AppleTalk. Such a network may include, for example, a local area network, a wide-area network, a virtual private network, the Internet, an intranet, an extranet, a public switched telephone network, an infrared network, a wireless network, and any combination thereof. The network may, furthermore, incorporate any suitable network topology. Examples of suitable network topologies include, but are not limited to, simple point-to-point, star topology, self organizing peer-to-peer topologies, and combinations thereof.

In embodiments utilizing a Web server, the Web server may run any of a variety of server or mid-tier applications, including HTTP servers, FTP servers, CGI servers, data servers, Java servers, and business application servers. The server(s) also may be capable of executing programs or scripts in response requests from user devices, such as by executing one or more Web applications that may be implemented as one or more scripts or programs written in any programming language, such as Java®, C, C# or C++, or any scripting language, such as Perl, Python, or TCL, as well as combinations thereof. The server(s) may also include database servers, including without limitation those commercially available from Oracle®, Microsoft®, Sybase®, and IBM®.

The environment may include a variety of data stores and other memory and storage media as discussed above. These may reside in a variety of locations, such as on a storage medium local to (and/or resident in) one or more of the computers or remote from any or all of the computers across the network. In a particular set of embodiments, the information may reside in a storage-area network ("SAN") familiar to those skilled in the art. Similarly, any necessary files for performing the functions attributed to the computers, servers, or other network devices may be stored locally and/or remotely, as appropriate. Where a system includes computerized devices, each such device may include hardware elements that may be electrically coupled via a bus, the elements including, for example, at least one central processing unit (CPU), at least one input device (e.g., a mouse, keyboard, controller, touch screen, or keypad), and at least one output device (e.g., a display device, printer, or speaker). Such a system may also include one or more storage devices, such as disk drives, optical storage devices, and solid-state storage devices such as random access memory ("RAM") or read-only memory ("ROM"), as well as removable media devices, memory cards, flash cards, etc.

Such devices also may include a computer-readable storage media reader, a communications device (e.g., a modem, a network card (wireless or wired), an infrared communication device, etc.), and working memory as described above. The computer-readable storage media reader may be connected with, or configured to receive, a computer-readable storage medium, representing remote, local, fixed, and/or removable storage devices as well as storage media for temporarily and/or more permanently containing, storing, transmitting, and retrieving computer-readable information. The system and various devices also typically will include a number of software applications, modules including program modules, services, or other elements located within at least one working memory device, including an operating system and application programs, such as a client application or Web browser. It should be appreciated that alternate embodiments may have numerous variations from that described above. For example, customized hardware might also be utilized and/or particular elements might be implemented in hardware, software (including portable software, such as applets), or both. Further, connection to other computing devices such as network input/output devices may be employed.

Storage media and computer readable media for containing code, or portions of code, may include any appropriate media known or used in the art, including storage media and communication media, such as but not limited to volatile and non-volatile, removable and non-removable media implemented in any method or technology for storage and/or transmission of information such as computer readable instructions, data structures, program modules, or other data, including RAM, ROM, EEPROM, flash memory or other memory technology, CD-ROM, digital versatile disk (DVD) or other optical storage, magnetic cassettes, magnetic tape, magnetic disk storage or other magnetic storage devices, or any other medium which may be utilized to store the desired information and which may be accessed by the a system device. Program modules, program components and/or programmatic objects may include computer-readable and/or computer-executable instructions of and/or corresponding to any suitable computer programming language. In at least one embodiment, each computer-readable medium may be tangible. In at least one embodiment, each computer-readable medium may be non-transitory in time. Based on the disclosure and teachings provided herein, a person of ordinary skill in the art will appreciate other ways and/or methods to implement the various embodiments.

The specification and drawings are, accordingly, to be regarded in an illustrative rather than a restrictive sense. It will, however, be evident that various modifications and changes may be made thereunto without departing from the broader spirit and scope of the invention as set forth in the claims.

The use of the terms "a" and "an" and "the" and similar referents in the context of describing embodiments (especially in the context of the following claims) are to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. The term "connected" is to be construed as partly or wholly contained within, attached to, or joined together, even if there is something intervening. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate embodiments and does not pose a limitation on the scope unless otherwise claimed. No language in the specification should be construed as indicating any non-claimed element as essential to the practice of at least one embodiment.

Preferred embodiments are described herein, including the best mode known to the inventors. Variations of those preferred embodiments may become apparent to those of ordinary skill in the art upon reading the foregoing description. The inventors expect skilled artisans to employ such variations as appropriate, and the inventors intend for embodiments to be constructed otherwise than as specifically described herein. Accordingly, suitable embodiments include all modifications and equivalents of the subject matter recited in the claims appended hereto as permitted by applicable law. Moreover, any combination of the above-described elements in all possible variations thereof is contemplated as being incorporated into some suitable embodiment unless otherwise indicated herein or otherwise clearly contradicted by context.

All references, including publications, patent applications, and patents, cited herein are hereby incorporated by reference to the same extent as if each reference were individually and specifically indicated to be incorporated by reference and were set forth in its entirety herein.

## Claims

1. A computer-implemented method for managing rights to computing application functionality, comprising:
under control of one or more computer systems configured with executable instructions, provisioning at least one application appliance virtual machine (220-222; 316-318) configured at least to execute at least a portion of an application, the provisioning performed at least in part by a virtual resource provider (206; 302);
providing at least one user access to functionality of the application at least in part by establishing at least one communication connection (322, 324) from a user virtual machine (310, 312) to at least one interface (328) of a plurality of interfaces (328-332) maintained at least in part by said at least one application appliance virtual machine, said user virtual machine being separate from said at least one application appliance virtual machine;
enforcing a condition of access to the functionality of the application, the condition of access to the functionality of the application specifying at least that the access occurs through said at least one communication connection and said at least one interface, the enforcing of the condition of access to the functionality of the application performed at least in part by the virtual resource provider; and
permitting data to be conveyed through said at least one communication connection for presentation to said at least one user.

2. A computer-implemented method according to claim 1, further comprising enforcing a condition of access from the user virtual machine (310, 312) to said at least one application appliance virtual machine (220-222; 316-318), the condition of access to said at least one application appliance virtual machine specifying at least that the access occurs through said at least one communication connection (322, 324) and said at least one interface (328), the enforcing of the condition of access to said at least one virtual machine performed at least in part by a control plane (210; 304) of the virtual resource provider (206; 302).

3. A computer-implemented method according to Claim 1, wherein said at least one application appliance virtual machine (220-222; 316-318) is implemented with a set of implementation resources and access to functionality of the set of implementation resources is controlled by a control plane (210; 304) of the virtual resource provider (206; 302).

4. A computer-implemented method according to Claim 3, wherein the set of implementation resources includes at least one of: a volatile storage device, a non-volatile storage device, a processor, a physical server, a network interface port, a network switch, and a network path.

5. A computer-implemented method according to one of Claims 1 to 4, wherein said at least one communication connection (322, 324) is implemented with a set of implementation resources and access to functionality of the set of implementation resources is controlled by a control plane (210; 304) of the virtual resource provider (206; 302).

6. A computer-implemented method according to one of Claims 1 to 5, wherein providing said at least one user access to functionality of the application comprises creating at least one policy specifying the condition of access and enforcing the condition of access comprises enforcing said at least one policy with a policy enforcement component of the virtual resource provider (206; 302).

7. A computer-implemented method according to one of Claims 1 to 6, wherein said at least one interface (328) comprises a plurality of interface elements corresponding to a plurality of functional features of the application and the condition of access to the functionality of the application further specifies that the access corresponds to a selected subset of the plurality of interface elements.

8. A computer-implemented method according to one of Claims 1 to 7, wherein provisioning said at least one application appliance virtual machine (220-222; 316-318) has an associated set of costs that are charged to an account associated with said at least one user.

9. A computer-implemented method according to Claim 8, wherein the set of application costs includes at least one cost corresponding to at least one application feature that is capable of being activated and deactivated.

10. A computer-implemented method according to one of Claims 1 to 9, further comprising:
receiving, at a control plane (210; 304) of the virtual resource provider (206; 302), a user request to activate at least one feature of the application from said at least one user;
submitting a control plane request to activate said at least one feature to a feature configuration interface of the application, the feature configuration interface maintained at least in part by said at least one application appliance virtual machine (220-222; 316-318) and inaccessible to said at least one user through said at least one communication connection (322, 324);
receiving, at the control plane, confirmation that said at least one feature has been activated; and
notifying a cost tracking component of the control plane that costs associated with said at least one activated feature are to be charged to an account associated with said at least one user.

11. A computer-implemented method according to one of Claims 1 to 10, wherein provisioning said at least one application appliance virtual machine (220-222; 316-318) has an associated set of implementation resource costs that are charged to an account associated with said at least one user.

12. A computer-implemented method according to one of Claims 1 to 11, further comprising receiving a user request to provision said at least one application appliance virtual machine (220-222; 316-318), the user request specifying, at least in part, at least one capacity of at least one implementation resource to be made available to said at least one application appliance virtual machine.

13. A computerized system for managing rights to computing application functionality, comprising:
a set of implementation resources configurable at least to implement a plurality of virtual resources;
a virtual resource provisioning component configured at least to provision virtual resources with the set of implementation resources responsive to provisioning requests, the virtual resources including at least one application appliance virtual machine (220-222; 316-318) configured at least to execute at least a portion of an application and at least one communication connection (322, 324) from a user virtual machine (310, 312) to at least one interface (328) of a plurality of interfaces (328-332) maintained by said at least one application appliance virtual machine, said user virtual machine being separate from said at least one application appliance virtual machine; and
a policy enforcement component configured at least to enforce a condition of access to functionality of the application, the condition of access to the functionality of the application specifying at least that the access occurs through said at least one communication connection and said at least one interface.

14. A computerized system according to Claim 13, wherein the computerized system further comprises a user interface component configured at least to enable a user to submit a request to access the functionality of the application and said at least one application appliance virtual machine (220-222; 316-318) is provisioned by the virtual resource provisioning component at least partly in response to the request to access the functionality of the application.

15. A computerized system according to Claims 13 or 14, wherein the computerized system further comprises a vendor interface component configured at least to enable an application vendor to configure said at least one virtual machine to execute said at least a portion of the application and to configure at least one cost associated with accessing the functionality of the application.

## Patentansprüche

1. Computerimplementiertes Verfahren zur Verwaltung von Rechten für Datenverarbeitungsanwendungsfunktionalitäten, das Folgendes umfasst:
unter der Steuerung von einem oder mehreren Computersystemen, die mit ausführbaren Anweisungen konfiguriert sind, Bereitstellen von wenigstens einer virtuellen Anwendungsgerätemaschine (220-222; 316-318), die wenigstens konfiguriert ist, um wenigstens einen Abschnitt einer Anwendung auszuführen, wobei das Bereitstellen wenigstens zum Teil von einem Anbieter (206; 302) von virtuellen Ressourcen durchgeführt wird;
Bereitstellen von wenigstens einem Benutzerzugang zu einer Anwendungsfunktionalität wenigstens zum Teil durch ein Herstellen von wenigstens einer Kommunikationsverbindung (322, 324) von einer virtuellen Benutzermaschine (310, 312) zu wenigstens einer Schnittstelle (328) einer Vielzahl von Schnittstellen (328-332), die wenigstens zum Teil von der wenigstens einen virtuellen Anwendungsgerätemaschine unterhalten werden, wobei die virtuelle Benutzermaschine von der wenigstens einen virtuellen Anwendungsgerätemaschine getrennt ist;
Durchsetzen einer Zugangsbedingung zu der Anwendungsfunktionalität, wobei die Zugangsbedingung zu der Anwendungsfunktionalität wenigstens spezifiziert, dass der Zugang über die wenigstens eine Kommunikationsverbindung und die wenigstens eine Schnittstelle erfolgt, wobei das Durchsetzen der Zugangsbedingung zu der Anwendungsfunktionalität wenigstens zum Teil durch den Anbieter von virtuellen Ressourcen durchgeführt wird; und
Ermöglichen, dass Daten durch die wenigstens eine Kommunikationsverbindung zur Präsentation gegenüber dem wenigstens einen Benutzer übermittelt zu werden.

2. Computerimplementiertes Verfahren nach Anspruch 1, ferner umfassend ein Durchsetzen einer Zugangsbedingung von der virtuellen Benutzermaschine (310, 312) zu der wenigstens einen virtuellen Anwendungsgerätemaschine (220-222; 316-318), wobei die Zugangsbedingung zu der wenigstens einen virtuellen Anwendungsgerätemaschine spezifiziert, dass der Zugang durch die wenigstens eine Kommunikationsverbindung (322, 324) und die wenigstens eine Schnittstelle (328) erfolgt, wobei das Durchsetzen der Zugangsbedingung zu der wenigstens einen virtuellen Maschine wenigstens zum Teil durch eine Steuerungsebene (210; 304) des Anbieters (206; 302) von virtuellen Ressourcen durchgeführt wird.

3. Computerimplementiertes Verfahren nach Anspruch 1, wobei die wenigstens eine virtuelle Anwendungsgerätemaschine (220-222; 316-318) mit einem Satz von Implementierungsressourcen implementiert ist und ein Zugang zu einer Funktionalität des Satzes von Implementierungsressourcen durch eine Steuerungsebene (210; 304) des Anbieters (206; 302) von virtuellen Ressourcen gesteuert wird.

4. Computerimplementiertes Verfahren nach Anspruch 3, wobei der Satz von Implementierungsressourcen wenigstens eines einschließt von: einer flüchtigen Speichervorrichtung, einer nichtflüchtigen Speichervorrichtung, einem Prozessor, einem physikalischen Server, einem Netzwerkschnittstellenanschluss, einem Netzwerkschalter und einem Netzwerkpfad.

5. Computerimplementiertes Verfahren nach einem der Ansprüche 1 bis 4, wobei die wenigstens eine Kommunikationsverbindung (322, 324) mit einem Satz von Implementierungsressourcen implementiert wird, und ein Zugang zu einer Funktionalität des Satzes von Implementierungsressourcen durch eine Steuerungsebene (210; 304) des Anbieters (206; 302) von virtuellen Ressourcen gesteuert wird.

6. Computerimplementiertes Verfahren nach einem der Ansprüche 1 bis 5, wobei das Bereitstellen des wenigstens einen Benutzerzugangs zu einer Anwendungsfunktionalität ein Erzeugen von wenigstens einer Richtlinie umfasst, die die Zugangsbedingung spezifiziert, und wobei das Durchsetzen der Zugangsbedingung ein Durchsetzen von wenigstens einer Richtlinie mit einer Richtliniendurchsetzungskomponente des Anbieters (206; 302) von virtuellen Ressourcen umfasst.

7. Computerimplementiertes Verfahren nach einem der Ansprüche 1 bis 6, wobei die wenigstens eine Schnittstelle (328) eine Vielzahl von Schnittstellenelementen umfasst, die einer Vielzahl von Funktionsmerkmalen der Anwendung entsprechen, und wobei die Zugangsbedingung zu der Anwendungsfunktionalität ferner spezifiziert, dass der Zugang einer ausgewählten Teilmenge der Vielzahl von Schnittstellenelementen entspricht.

8. Computerimplementiertes Verfahren nach einem der Ansprüche 1 bis 7, wobei die Bereitstellung der wenigstens einen virtuellen Anwendungsgerätemaschine (220-222; 316-318) einen assoziierten Satz von Kosten aufweist, die für ein Konto berechnet werden, das mit dem wenigstens einen Benutzer assoziiert ist.

9. Computerimplementiertes Verfahren nach Anspruch 8, wobei der Satz von Anwendungskosten wenigstens einen Kostenpunkt einschließt, der wenigstens einem Anwendungsmerkmal entspricht, das aktiviert und deaktiviert werden kann.

10. Computerimplementiertes Verfahren nach einem der Ansprüche 1 bis 9, ferner umfassend:
Empfangen einer Benutzeranfrage von dem wenigstens einen Benutzer auf einer Steuerungsebene (210; 304) des Anbieters (206; 302) von virtuellen Ressourcen, um wenigstens ein Merkmal der Anwendung zu aktivieren;
Einreichen einer Steuerungsebenenanfrage an eine Merkmalkonfigurierungsschnittstelle der Anwendung, um das wenigstens eine Merkmal zu aktivieren, wobei die Merkmalkonfigurierungsschnittstelle zumindest zum Teil von der wenigstens einen virtuellen Anwendungsgerätmaschine (220-222; 316-318) unterhalten wird, und unzugänglich für den wenigstens einen Benutzer über die wenigstens eine Kommunikationsverbindung (322, 324) ist;
Empfangen einer Bestätigung auf der Steuerungsebene, dass das wenigstens eine Merkmal aktiviert wurde; und
Benachrichtigen einer Kostennachverfolgungskomponente der Steuerungsebene, dass Kosten, die mit dem wenigstens einen aktivierten Merkmal assoziiert sind, einem Konto berechnet werden sollen, das mit dem wenigstens einen Benutzer assoziiert ist.

11. Computerimplementiertes Verfahren nach einem der Ansprüche 1 bis 10, wobei das Bereitstellen der wenigstens einen virtuellen Anwendungsgerätemaschine (220-222; 316-318) einen assoziierten Satz von Implementierungsressourcenkosten aufweist, die einem Konto berechnet werden, dass mit dem wenigstens einen Benutzer assoziiert ist.

12. Computerimplementiertes Verfahren nach einem der Ansprüche 1 bis 11, ferner umfassend ein Empfangen einer Benutzeranfrage nach dem Bereitstellen der wenigstens einen virtuellen Anwendungsgerätemaschine (220-222; 316-318), wobei die Benutzeranfrage wenigstens zum Teil wenigstens eine Fähigkeit der wenigstens einen Implementierungsressource spezifiziert, die der wenigstens einen virtuellen Anwendungsgerätemaschine zur Verfügung gestellt werden soll.

13. Computersystem zur Verwaltung von Rechten auf Datenverarbeitungsanwendungsfunktionalitäten, das Folgendes umfasst:
einen Satz von Implementierungsressourcen, die konfigurierbar sind, um eine Vielzahl von virtuellen Ressourcen zu implementieren;
eine Bereitstellungkomponente von virtuellen Ressourcen, die wenigstens dazu konfiguriert ist, virtuelle Ressourcen mit einem Satz von Implementierungsressourcen als Reaktion auf Bereitstellungsanfragen bereitzustellen, wobei die virtuellen Ressourcen wenigstens eine virtuelle Anwendungsgerätemaschine (220-222; 316-318), die wenigstens konfiguriert ist, um wenigstens einen Abschnitt einer Anwendung auszuführen, und wenigstens eine Kommunikationsverbindung (322, 324) von einer virtuellen Benutzermaschine (310, 312) zu wenigstens einer Schnittstelle (328) einer Vielzahl von Schnittstellen (328-332), die von der wenigstens einen virtuellen Anwendungsgerätemaschine unterhalten werden, einschließen, wobei die virtuelle Benutzermaschine von der wenigstens einen virtuellen Anwendungsgerätemaschine getrennt ist; und
eine Richtliniendurchsetzungskomponente, die wenigstens konfiguriert ist, um eine Zugangsbedingung zu einer Anwendungsfunktionalität durchzusetzen, wobei die Zugangsbedingung der Anwendungsfunktionalität wenigstens spezifiziert, dass der Zugang über die wenigstens eine Kommunikationsverbindung und die wenigstens eine Schnittstelle erfolgt.

14. Computersystem nach Anspruch 13, wobei das Computersystem ferner eine Benutzerschnittstellenkomponente umfasst, die wenigstens konfiguriert ist, um einem Benutzer zu ermöglichen, eine Anfrage auf einen Zugang zu der Anwendungsfunktionalität einzureichen und wobei die wenigstens eine virtuelle Anwendungsgerätemaschine (220-222; 316-318) von der Bereitstellungskomponente von virtuellen Ressourcen wenigstens zum Teil als Reaktion auf die Anfrage auf einen Zugang zu der Anwendungsfunktionalität bereitgestellt wird.

15. Computersystem nach einem der Ansprüche 13 oder 14, wobei das Computersystem ferner eine Herstellerschnittstellenkomponente umfasst, die wenigstens konfiguriert ist, um einem Anwendungshersteller zu ermöglichen, die wenigstens eine virtuelle Maschine zu konfigurieren, um den wenigstens einen Abschnitt der Anwendung auszuführen und wenigsten einen Kostenpunkt, der mit dem Zugreifen auf die Anwendungsfunktionalität assoziiert ist, zu konfigurieren.

## Revendications

1. Procédé mis en oeuvre par un ordinateur pour gérer des droits à une fonctionnalité d'application informatique, comprenant :
sous le contrôle d'un ou plusieurs systèmes informatiques configurés avec des instructions exécutables, la mise à disposition d'au moins une machine virtuelle d'appareil d'application (220-222 ; 316-318) configurée au moins pour exécuter au moins une partie d'une application, la mise à disposition étant réalisée au moins en partie par un fournisseur de ressources virtuelles (206 ; 302) ;
la fourniture d'au moins un accès d'utilisateur à une fonctionnalité de l'application au moins en partie en établissant au moins une connexion de communication (322, 324) d'une machine virtuelle d'utilisateur (310, 312) à au moins une interface (328) d'une pluralité d'interfaces (328-332) maintenues au moins en partie par ladite au moins une machine virtuelle d'appareil d'application, ladite machine virtuelle d'utilisateur étant distincte de ladite au moins une machine virtuelle d'appareil d'application ;
le respect d'une condition d'accès à la fonctionnalité de l'application, la condition d'accès à la fonctionnalité de l'application précisant au moins que l'accès se fait par le biais de ladite au moins une connexion de communication et de ladite au moins une interface, le respect de la condition d'accès à la fonctionnalité de l'application étant réalisé au moins en partie par le fournisseur de ressources virtuelles ; et
le fait de permettre à des données d'être transportées par le biais de ladite au moins une connexion de communication pour une présentation audit au moins un utilisateur.

2. Procédé mis en oeuvre par un ordinateur selon la revendication 1, comprenant en outre le respect d'une condition d'accès de la machine virtuelle d'utilisateur (310, 312) à ladite au moins une machine virtuelle d'appareil d'application (220-222 ; 316-318), la condition d'accès à ladite au moins une machine virtuelle d'appareil d'application précisant au moins que l'accès se fait par le biais de ladite au moins une connexion de communication (322, 324) et de ladite au moins une interface (328), le respect de la condition d'accès à ladite au moins une machine virtuelle étant réalisé au moins en partie par un plan de régulation (210 ; 304) du fournisseur de ressources virtuelles (206 ; 302) .

3. Procédé mis en oeuvre par un ordinateur selon la revendication 1, dans lequel ladite au moins une machine virtuelle d'appareil d'application (220-222 ; 316-318) est mise en oeuvre avec un ensemble de ressources de mise en oeuvre et l'accès à une fonctionnalité de l'ensemble de ressources de mise en oeuvre est régulé par un plan de régulation (210 ; 304) du fournisseur de ressources virtuelles (206 ; 302).

4. Procédé mis en oeuvre par un ordinateur selon la revendication 3, dans lequel l'ensemble de ressources de mise en oeuvre inclut au moins l'un parmi : un dispositif de mise en mémoire temporaire, un dispositif de mise en mémoire non temporaire, un processeur, un serveur physique, un port d'interface réseau, un commutateur de réseau et un chemin de réseau.

5. Procédé mis en oeuvre par un ordinateur selon l'une des revendications 1 à 4, dans lequel ladite au moins une connexion de communication (322, 324) est mise en oeuvre avec un ensemble de ressources de mise en oeuvre et l'accès à une fonctionnalité de l'ensemble de ressources de mise en oeuvre est régulé par un plan de régulation (210 ; 304) du fournisseur de ressources virtuelles (206 ; 302).

6. Procédé mis en oeuvre par un ordinateur selon l'une des revendications 1 à 5, dans lequel la fourniture dudit au moins un accès d'utilisateur à une fonctionnalité de l'application comprend la création d'au moins une politique précisant la condition d'accès et le respect de la condition d'accès comprend le respect de ladite au moins une politique avec une composante de respect de politiques du fournisseur de ressources virtuelles (206 ; 302).

7. Procédé mis en oeuvre par un ordinateur selon l'une des revendications 1 à 6, dans lequel ladite au moins une interface (328) comprend une pluralité d'éléments d'interface correspondant à une pluralité de caractéristiques fonctionnelles de l'application et la condition d'accès à la fonctionnalité de l'application précise en outre que l'accès correspond à un sous-ensemble sélectionné de la pluralité d'éléments d'interface.

8. Procédé mis en oeuvre par un ordinateur selon l'une des revendications 1 à 7, dans lequel la mise à disposition de ladite au moins une machine virtuelle d'appareil d'application (220-222 ; 316-318) a un ensemble associé de coûts qui sont facturés à un compte associé audit au moins un utilisateur.

9. Procédé mis en oeuvre par un ordinateur selon la revendication 8, dans lequel l'ensemble de coûts d'application inclut au moins un coût correspondant à au moins une caractéristique d'application qui peut être activée et désactivée.

10. Procédé mis en oeuvre par un ordinateur selon l'une des revendications 1 à 9, comprenant en outre :
la réception, au niveau d'un plan de régulation (210 ; 304) du fournisseur de ressources virtuelles (206 ; 302), d'une demande d'utilisateur pour activer au moins une caractéristique de l'application à partir dudit au moins un utilisateur ;
la soumission d'une demande de plan de régulation pour activer ladite au moins une caractéristique à une interface de configuration de caractéristiques de l'application, l'interface de configuration de caractéristiques étant maintenue au moins en partie par ladite au moins une machine virtuelle d'appareil d'application (220-222 ; 316-318) et inaccessible audit au moins un utilisateur par le biais de ladite au moins une connexion de communication (322, 324) ;
la réception, au niveau du plan de régulation, d'une confirmation que ladite au moins une caractéristique a été activée ; et
la notification d'une composante de suivi de coûts du plan de régulation que des coûts associés à ladite au moins une caractéristique activée doivent être facturés à un compte associé audit au moins un utilisateur.

11. Procédé mis en oeuvre par un ordinateur selon l'une des revendications 1 à 10, dans lequel la mise à disposition de ladite au moins une machine virtuelle d'appareil d'application (220-222 ; 316-318) a un ensemble associé de coûts de ressources de mise en oeuvre qui sont facturés à un compte associé audit au moins un utilisateur.

12. Procédé mis en oeuvre par un ordinateur selon l'une des revendications 1 à 11, comprenant en outre la réception d'une demande d'utilisateur pour mettre à disposition ladite au moins une machine virtuelle d'appareil d'application (220-222 ; 316-318), la demande d'utilisateur précisant, au moins en partie, au moins une capacité d'au moins une ressource de mise en oeuvre à rendre disponible pour ladite au moins une machine virtuelle d'appareil d'application.

13. Système informatisé pour gérer des droits à une fonctionnalité d'application informatique, comprenant :
un ensemble de ressources de mise en oeuvre configurables au moins pour mettre en oeuvre une pluralité de ressources virtuelles ;
une composante de mise à disposition de ressources virtuelles configurée au moins pour mettre à disposition des ressources virtuelles avec l'ensemble de ressources de mise en oeuvre répondant à des demandes de mise à disposition, les ressources virtuelles incluant au moins une machine virtuelle d'appareil d'application (220-222 ; 316-318) configurée au moins pour exécuter au moins une partie d'une application et au moins une connexion de communication (322, 324) d'une machine virtuelle d'utilisateur (310, 312) à au moins une interface (328) d'une pluralité d'interfaces (328-332) maintenues par ladite au moins une machine virtuelle d'appareil d'application, ladite machine virtuelle d'utilisateur étant distincte de ladite au moins une machine virtuelle d'appareil d'application ; et
une composante de respect de politiques configurée au moins pour respecter une condition d'accès à une fonctionnalité de l'application, la condition d'accès à la fonctionnalité de l'application précisant au moins que l'accès se fait par le biais de ladite au moins une connexion de communication et de ladite au moins une interface.

14. Système informatisé selon la revendication 13, dans lequel le système informatisé comprend en outre une composante d'interface utilisateur configurée au moins pour permettre à un utilisateur de soumettre une demande d'accès à la fonctionnalité de l'application et ladite au moins une machine virtuelle d'appareil d'application (220-222 ; 316-318) est mise à disposition par la composante de mise à disposition de ressources virtuelles au moins partiellement en réponse à la demande d'accès à la fonctionnalité de l'application.

15. Système informatisé selon les revendications 13 ou 14, dans lequel le système informatisé comprend en outre une composante d'interface de prestataire configurée au moins pour permettre à un prestataire d'applications de configurer ladite au moins une machine virtuelle pour exécuter ladite au moins une partie de l'application et pour configurer au moins un coût associé à l'accès à la fonctionnalité de l'application.
